# EUROPÄISCHE PATENTANMELDUNG

(11) **EP 2 685 145 A2**
(43) Veröffentlichungstag der Anmeldung: **15.01.2014**
(21) Anmeldenummer: 13174574.7
(22) Anmeldetag: 01.07.2013
(51) Int. Cl.: F16K 31/06

(54) **Ventil**

(30) Priorität: 09.07.2012 DE 102012106134
(71) Anmelder: SVM Schultz Verwaltungs-GmbH & Co. KG, 87700 Memmingen (DE)
(72) Erfinder: Mang, Helmut, 87700 Memmingen (DE); Albrecht, Gerhard, 87700 Memmingen-Steinheim (DE)
(74) Vertreter: Pfister, Stefan Helmut Ulrich

(57) **Zusammenfassung**

Die Erfindung betrifft ein Ventil (1), welches aus einem Antriebsteil (2) und einem Ventilteil (3) besteht. Das Ventilteil (3) umfasst einen Ventilblock (31), welcher zumindest eine Durchlassöffnung (30) aufweist. Des Weiteren umfasst das Ventilteil (3) einen von einem Antrieb bewegbaren Stößel (4), wobei der Stößel (4) je nach seiner Stellung die Durchlassöffnung (30) freigibt oder verschließt. Zwischen Ventilblock (31) und Stößel (4) ist eine Feder (5) angeordnet.

## Beschreibung

Die Erfindung betrifft ein Ventil, bestehend aus einem Antriebsteil und einem Ventilteil, bei welchem das Ventilteil einen, zumindest eine Durchlassöffnung aufweisenden Ventilblock sowie einen bewegbaren Stößel aufweist, wobei der Stößel mit dem vom Antrieb bewegbaren Antriebselement in Wirkverbindung steht und der Stößel je nach seiner Stellung die Durchlassöffnung freigibt oder verschließt.

Vorgenannte Ventile sind zum Beispiel als Schieberventile hinlänglich bekannt. Geschickter Weise wird dabei die Anordnung so gewählt, dass der Stößel auf dem Ventilblock geführt ist. Je nach Stellung des Schiebers wird dann die zumindest eine Durchlassöffnung, die sich im Ventilblock befindet, geöffnet oder geschlossen. Für die Bewegung, insbesondere die lineare Bewegung des bewegbaren Stößels, ist ein Antriebselement des Antriebes vorgesehen, wobei der Antrieb natürlich entsprechend Energie benötigt. Typischer Weise wird als Antrieb zum Beispiel ein Elektromagnet und als Antriebselement der Anker oder die Ankerstange des Elektromagneten eingesetzt, ohne aber hierauf den erfindungsgemäßen Vorschlag zu beschränken.

Die vorliegende Erfindung hat es sich nun zur Aufgabe gemacht, ein Ventil wie eingangs beschrieben derart weiterzuentwickeln, dass die geöffnete Stellung mit geringstem Energieaufwand gehalten wird.

Zur Lösung dieser Aufgabe geht die Erfindung aus von einem Ventil wie eingangs beschrieben und schlägt vor, dass zwischen Ventilblock und Stößel eine Feder angeordnet ist, gegen deren Rückstellkraft das Antriebselement den Stößel anstellt.

Durch die geschickte Anordnung der Feder zwischen Ventilblock und Stößel drückt das Antriebselement den Stößel gegen die rückstellende Kraft der Feder auf den Ventilblock, wenn die Durchlassöffnung, also das Ventil insgesamt, zu schließen ist. Dieser Kraftspeicher steht dann zur Verfügung, den Stößel in der geöffneten Stellung des Ventiles/Durchlassöffnung derart zuverlässig zurückzuversetzen, dass die offene Stellung mit geringstem Aufwand, insbesondere mit geringstem Energieaufwand beziehungsweise Stromverbrauch offen gehalten ist.

Insbesondere ist die Anordnung sehr raumsparend ausbildbar, weil die Feder in dem sowieso vorhandenen Spalt zwischen Ventilblock und Stößel angeordnet ist. Hieraus resultiert der Vorteil, dass sich die Einbaumaße nicht verändern.

In einer weiteren bevorzugten Ausgestaltung der Erfindung ist vorgesehen, dass der Stößel an seinem dem Ventilblock zugewandten Ende topfartig ausgebildet und auf dem Ventilblock geführt ist.

Die topfartige Ausgestaltung des Stößels, gerade im Bereich des Ventilblocks, bildet den Raum, in welchem die Feder dann eingesetzt ist. Dabei ist die Feder im Topfinneren des Stößels angeordnet. Diese bevorzugte Ausgestaltung des Stößels hat auch den Vorteil, dass der Stößel insgesamt etwas leichter wird und daher eine geringere Masse zu bewegen ist, was zum einen günstig für den Energieverbrauch, zum anderen günstig für die Auslegung der Feder ist.

Aus der topfartigen Ausgestaltung des Stößels resultiert auch ein ringartiger Überstand der für Führungsaufgaben des Stößels auf dem Ventilblock, der hierzu korrespondierend ausgebildet ist, dient. Dabei ist der topfartig ausgebildete Stößel mit seinem offenen Ende auf dem Ventilblock aufgesetzt und auf diesem geführt.

In einer weiteren bevorzugten Ausgestaltung des Vorschlages ist der Stößel an seinem den Antriebselement zugewandten Ende stift- beziehungsweise hülsenartig ausgebildet. Die Anordnung ist dabei so gewählt, dass der Durchmesser des Stößels in Längsrichtung (diese entspricht auch der Bewegungsrichtung des Stößels) nicht gleichbleibend, sondern veränderlich ist. Geschickter Weise besitzt dabei der Bereich des Stößels, der dem Antriebselement zugewandt ist, den kleinsten Durchmesser, da dies zum einen für gegebenenfalls vorgesehene Führungsabschnitte, aber auch für die Übertragung der Bewegung von dem Antriebselement auf den Stößel bereits ausreichend ist. An dem dem Antriebselement abgewandten Ende des Stößels ist dann die topfartige Ausgestaltung vorgesehen, die insbesondere die Führungsaufgabe auf dem Ventilblock übernimmt. Der Stößel ist dabei alternativ aus einem Vollmaterial in einem Zerspanungsschritt herausgearbeitet worden, wobei dann der dem Antriebselement zugewandte Bereich des Stößels stiftartig ausgeführt ist, also aus Vollmaterial besteht, oder hülsenartig, also innen hohl realisiert ist, was wiederum das Gewicht beziehungsweise die Masse des Stößels geschickter Weise reduziert.

Des Weiteren ist vorgesehen, dass Stößel und Antriebselement als einzelne Elemente unabhängig voneinander hergestellt und starr miteinander verbunden sind. Hierdurch ist es möglich, die Bewegungen, die auf das Antriebselement eingeprägt werden, unmittelbar auf den Stößel zu übertragen. Dass die beiden Elemente unabhängig voneinander hergestellt werden, hat den weiteren Vorteil, dass die jeweilige Materialwahl der jeweiligen Aufgabe optimiert angepasst werden kann.

In einer anderen Variante gemäß der Erfindung ist der Stößel und das Antriebselement durch Kraftwirkung, insbesondere in Bewegungsrichtung des Antriebselements miteinander verbunden. Stößel und Antriebselement sind also nicht starr aneinander gekoppelt, sondern liegen aufeinander auf, wobei die Feder, die zwischen Stößel und Ventilblock vorgesehen ist, die Kraft zur Verfügung stellt, durch die der Stößel auf dem Antriebselement aufliegt, entgegen der Antriebskraft, die in das Antriebselement eingeprägt wird.

Dabei ist zu beachten, dass das Antriebselement zum Beispiel beim Elektromagnet der Anker oder auch ein von einem Elektromotor angetriebenes Element ist. Es ist auch möglich, dass das Antriebselement Teil eines Linearantriebes ist, der als Antrieb im Sinne der Erfindung eingesetzt wird. Gerade bei Antriebskonzepten, die nur in eine Richtung wirken, ist die Feder doppelt günstig, da dadurch die rückgezogene, nicht mit Energieaufwand behaftete Stellung sicher und zuverlässig eingenommen werden kann.

Neben der starren, aber zweiteiligen Ausgestaltung von Stößel und Antriebselement umfasst die Erfindung aber auch Lösungen, bei welchen Antriebselement und Stößel einstückig ausgebildet sind.

Günstiger Weise ist der Stößel derart ausgebildet, dass er an seinem topfartigen Bereich am, dem Antriebselement abgewandten Ende, einen mit der zumindest einen Durchlassöffnung zusammenwirkenden Dichtabschnitt aufweist und an seinem topfartige Bereich, vom Dichtabschnitt beabstandet, mindestens eine Entlüftungsöffnung aufweist.

Der Stößel, der insbesondere schieberartig ausgebildet ist, hat die Aufgabe, die in dem Ventilblock vorgesehene Durchlassöffnung zu öffnen oder zu verschließen. In diesem Endbereich des Stößels, der daher auch dem Antriebselement abgewandt ist, befindet sich der Dichtabschnitt, der für ein zuverlässiges, leckagefreie Verschließen der Durchlassöffnung im geschlossenen Zustand des Ventiles sorgt.

Günstiger Weise ist zusätzlich in dem topfartigen Bereich des Stößels, der vorteilhafterweise die Feder aufnimmt, mindestens eine Entlüftungsöffnung vorgesehen, durch welche dieses Volumen in Druckausgleich steht und be- beziehungsweise entlüftbar ist. In Bewegungsrichtung gesehen ist dabei die Entlüftungsöffnung vom Dichtabschnitt beabstandet.

Die Längserstreckung der Durchlassöffnung ist dabei winklig, insbesondere rechtwinklig orientiert zur Bewegungsrichtung des Antriebselementes des Stößels. Die Durchlassöffnung ist alternativ aber auch abgewinkelt ausführbar.

Für die Ausgestaltung des Stößels sind erfindungsgemäß eine Vielzahl unterschiedlicher Varianten vorgesehen. Zum Beispiel ist der Stößel ein- oder auch mehrteilig ausgebildet, wobei durch die Mehrteiligkeit verschiedene Abschnitte des Stößels unterschiedliche Materialien und daher auch unterschiedliche Eigenschaften, gerade zum Beispiel im Hinblick auf den eingesetzten Antrieb (Magnetismus) zugeordnet werden können. Eine Mehrteiligkeit des Stößels kann aber auch die Herstellung des verhältnismäßig komplex gestalteten Stößels erleichtern. So ist zum Beispiel vorgesehen, dass der Stößel im Ganzen oder zumindest Einzelteile des Stößels durch einen Stanz- oder Pressvorgang, insbesondere durch einen Kaltumformungsvorgang hergestellt wurde. Mehrteiligkeit ist somit im Hinblick auf unterschiedlich einsetzbare Herstellungsverfahren günstig.

Von großem Vorteil ist, wenn eine Gleitführung des Stößels auf dem Ventilblock vorgesehen ist. Die Gleitführung verhindert oder reduziert den Verschleiß, beziehungsweise ist auch energieeffizient. Gleichzeitig ist aber auch darauf zu achten, dass der Dichtabschnitt des Stößels zuverlässig die Durchlassöffnungen verschließt. Die Gleitführung kann zum Beispiel als Gleitbeschichtung oder durch eine Folienlagerung des Stößels auf dem Ventilblock realisiert sein, wobei die Gleitbeschichtung entweder auf der dem Ventilblock zugewandten Oberfläche des Stößels oder auf der dem Stößel zugewandten Oberfläche des ventilblockes angeordnet ist oder selbstverständlich auch beidseitig vorgesehen sein kann. Eine Verbesserung der Führung wird auch durch eine Härtung der zusammenwirkenden Materialien beziehungsweise Oberflächen erreicht, wobei hierbei insbesondere eine Härtung mittels eines Diffusionsverfahrens bei niedriger Temperatur (kleiner 300° Celsius) vorgesehen wird, bei welchem eine große Menge Kohlenstoff eindiffundiert wird. Der Kohlenstoff wird dabei in Zwischengitterplätzen gelöst und bildet somit keine Karbide. Durch das Eindiffundieren einer großen Menge von Kohlenstoff entsteht eine erhebliche Druckspannung an der Metalloberfläche, die zu einer sehr hohen Oberflächenhärte führt. Insbesondere ist dieses Verfahren vorteilhaft, da es die sonstigen Materialeigenschaften des verwendeten Werksteugstahls nicht verändert. Hierzu zählt insbesondere seine Korrosionsbeständigkeit, aber auch der unmagnetische Zustand. Ein solches Verfahren ist insbesondere auch an geometrisch schwierigen Stellen, zum Beispiel auf Innenseiten, Sacklöchern und so weiter realisierbar.

Bevorzugt ist der Ventilblock beziehungsweise der Stößel aus Automatenstahl oder allgemein aus Metall gefertigt.

Geschickter Weise ist als Antrieb ein Elektromagnet vorgesehen, bei welchem der im Ankerraum beweglich gelagerte Anker als Antriebselement bei Bestromung einer Wicklungen von Strom leitendem Draht tragenden Magnetspule bewegt wird, um einen Arbeitsluftspalt zu verkleinern oder zu verschließen. Das elektromagnetische Antriebskonzept ist nicht das einzige Antriebskonzept gemäß der Erfindung, es können hierzu auch andere Konzepte, wie zum Beispiel Elektromotor, Linearantrieb, vorgesehen sein.

Geschickter Weise ist der Ankerraum von einem Magnetkern begrenzt und der Magnetkern besitzt eine Durchdringungsöffnung für den Stößel, insbesondere den stiftartigen Bereich des Stößels. Des Weiteren ist vorgesehen, dass sich der Arbeitsluftspalt zwischen dem Magnetkern und der dem Magnetkern zugewandten Ankerseite befindet. Die Feder stützt sich einerseits an dem beweglichen Stößel und andererseits an dem Ventilblock ab. Der Luftspalt befindet sich dabei am Magnetkern im Ankerraum. In Bewegungsrichtung des Ankers von diesem entfernt-außerhalb des Ankerraumes - ist dann die Feder vorgesehen. Eine Aktivierung des Stromflusses bewegt den Anker in Richtung des Kerns, um den Arbeitsluftspalt zu verringern oder zu schließen, wobei gleichzeitig der Stößel derart versetzt wird, dass der Dichtbereich die zumindest eine Durchlassöffnung verschließt. Gleichzeitig wird auch die Feder komprimiert und somit der Kraftspeicher aufgeladen, der bei ausgeschaltetem Elektromagneten für ein Zurückbewegen des Stößels und somit auch des damit verbundenen beziehungsweise anliegenden Ankers Antriebselementes sorgt.

In der Zeichnung ist die Erfindung insbesondere in einem Ausführungsbeispiel schematisch dargestellt. Es zeigen:
- Fig. 1a und 1b: je das erfindungsgemäße Ventil in einer Schnittdarstellung in der geschlossenen (Fig. 1a) und geöffneten (Fig. 1b) Stellung.
- Fig. 2: in einer Schnittdarstellung in einer ausschnittsweisen Vergrößerung den Stößel des erfindungsgemäßen Ventils

In den Figuren sind gleiche oder einander entsprechende Elemente jeweils mit den gleichen Bezugszeichen bezeichnet und werden daher, sofern nicht zweckmäßig, nicht erneut beschrieben.

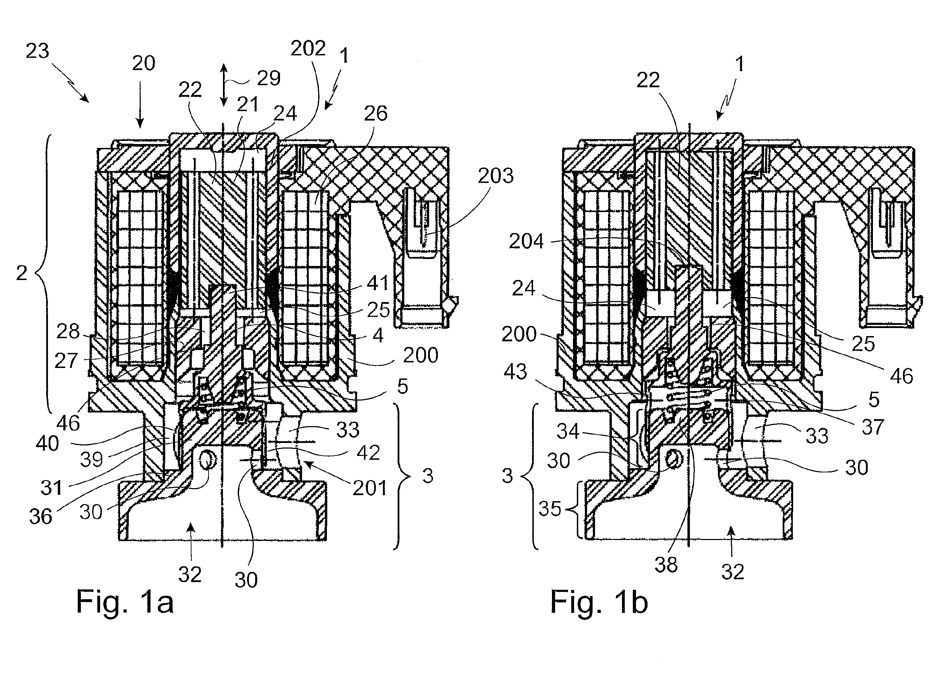

In Fig. 1a beziehungsweise Fig. 1b ist das erfindungsgemäße Ventil 1 in einem Ausführungsbeispiel gezeigt. Es besteht aus einem Antriebsteil 2, das in dem hier gezeigten Ausführungsbeispiel als Elektromagnet 23 realisiert ist. Des Weiteren besitzt das Ventil 1 einen Ventilteil 3, der in dem nicht weiter dargestellten hydraulischen beziehungsweise pneumatischen Kreislauf integriert ist. Teile dieses Kreislaufes sind der Zulauf 32, die Durchlassöffnung 30 sowie der Ausgang 33, wobei die Funktionalität von Zulauf 32 und Ausgang 33 bezogen auf die Durchlassöffnung 30 auch umgekehrt sein kann.

Das Ventil eignet sich sowohl zur Steuerung von pneumatischen oder hydraulischen Aufgaben, also der Steuerung von Medien in flüssiger oder gasförmiger Phase.

Das Ventilteil 3 besitzt den Ventilblock 31, der verallgemeinert trichterförmig ausgebildet ist und in seinem oberen, dem Antriebsteil 2 zugewandten Bereich, einen im Wesentlichen zylindrischen Abschnitt 34 aufweist, welcher auch die mindestens eine (hier zum Beispiel zwei oder drei) Durchlassöffnung/en 30 aufweist, an dem sich dann, vom Antriebsteil 2 abgewandt, ein Aufweitungsbereich 35, der den Zulauf 32 bildet, anschließt. Der Ventilblock 31 ist dabei mit dem Gehäuse 200 verbunden, zum Beispiel verbörtelt, verschweißt, verklebt, verlötet, verstemmt oder in einem Presssitz gehalten. Geschickter Weise besitzt das Gehäuse 200 auch eine Öffnung 201, die mit der Durchlassöffnung 30 des Ventilblocks 31 kommuniziert und so den Ausgang 33 bildet.

Der Ventilblock 31 besitzt dabei einen Verbindungsring 36, der an der Innenseite des Gehäuses 200, an dessen Ende anliegt. Der Durchmesser des Verbindungsringes 36 ist größer als der Durchmesser des zylindrischen Abschnittes 34, aber kleiner als der Durchmesser des Aufweitungsbereiches 35. Der Verbindungsring 36 befindet sich dabei zwischen dem zylindrischen Abschnitt 34 und dem Aufweitungsbereich 35.

Im Bereich des zylindrischen Abschnitts 34 bildet sich zwischen dem Ventilblock 31 und dem Gehäuse 200 ein Ringspalt 39 aus, der zur Leitung des Mediums dient und in welchem sich auch der topfartige Abschnitt 40 des Stößels 4 bewegt. Der Ringspalt 39 ist über die mindestens eine Durchlassöffnung 30 mit dem Zulauf 32 und über die Öffnung 201 mit dem Ausgang 33 verbunden.

Das Antriebsteil 2 ist in dem hier gezeigten Ausführungsbeispiel als Elektromagnet 23 ausgebildet. Allgemein besteht ein Antriebsteil 2 aus einem Antrieb 20, der beliebig gebildet sein kann, der auf ein Antriebselement 21 wirkt und in dem hier gezeigten Ausführungsbeispiel für eine lineare Bewegung des Antriebselementes 21 sorgt. Die Bewegungsrichtung des Antriebselementes 21 ist durch den Doppelpfeil 29 angegeben. Das Antriebselement 21 steht dabei in Wirkverbindung mit dem Stößel 4, der seinerseits, schieberartig - je nach Stellung des Antriebselements 21 - die Durchlassöffnungen 30 öffnet oder verschließt.

In dem hier gezeigten Ausführungsbeispiel ist das Antriebskonzept des Antriebes 20 als Elektromagnet realisiert, das Antriebselement 21 ist ein Anker 22, der in einem Ankerraum 24 längsbeweglich gelagert ist. Der Elektromagnet 23 besitzt eine Magnetspule 26, die zumindest teilweise den Ankerraum 24 umschließt. Die Magnetspule 26 trägt eine Vielzahl von Wicklungen von Strom leitendem Draht, wobei die Magnetspule bei Beaufschlagung der Magnetspule mit Strom ein Magnetfeld erzeugt, dessen Magnetfeldlinien insbesondere im Spuleninneren und daher auch im Ankerraum 24 im Wesentlichen achsparallel zur Spulenachse der Magnetspule 26 ist und den magnetisierbaren oder aus magnetischem Material bestehenden Anker 22 längs bewegt, entsprechend der Polarität des erzeugten Magnetfelds, um einen Arbeitsluftspalt 25 zu verringern oder zu schließen. Mit 203 sind die Anschlusskontakte für die Stromversorgung der Magnetspule 26 gezeigt.

Die so erzeugte Bewegung des Antriebselements 21 beziehungsweise des Ankers 22 wirkt gegen die rückstellende Wirkung einer Feder 5, die, wenn der Stromfluss durch die Magnetspule 26 abgeschaltet wird, das Antriebselement 21 beziehungsweise den Anker 22 in die Ausgangsposition zurück verschiebt und dabei den Arbeitsluftspalt 25 wieder vergrößert, beziehungsweise öffnet.

Der Ankerraum 24 wird von einem hülsenartigen Polrohr 202 begrenzt, welches einseitig offen ist, um den Einbau des Ankers 22 zu erlauben. Das Polrohr 202 wird in die Magnetspule 26 eingesetzt und von dem Gehäuse 200 gehalten. Das Polrohr 202 ist topf- oder sacklochartig ausgebildet, daher also einseitig offen. Nachdem der Anker 22 eingesetzt ist, wird das offene Ende des Ankerraumes 24 durch den Magnetkern 27 verschlossen. Der Magnetkern 27 besitzt eine Durchdringungsöffnung 28, um ein Bauteil hindurchzuführen, das die Bewegung des Antriebselementes 21/Ankers 22 auf den Stößel 4 überträgt. Der Arbeitsluftspalt 25 befindet sich in dem hier gezeigten Ausführungsbeispiel zwischen dem Magnetkern 27 und dem Antriebselement 21 beziehungsweise dem Anker 22.

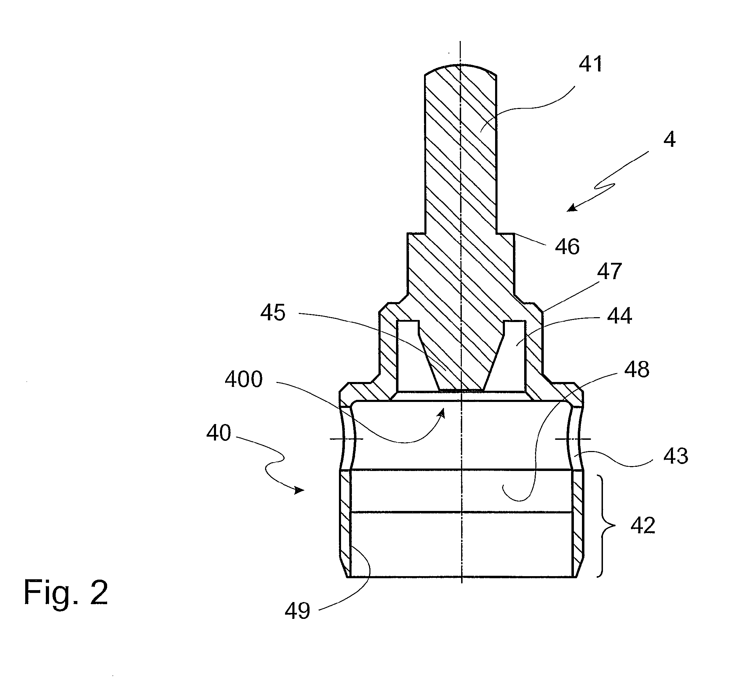

In dem hier gezeigten Ausführungsbeispiel besitzt der Stößel 4 einen stiftartigen, dem Antriebselement 23/Anker 22 zugewandten Bereich 41, der durch die Durchdringungsöffnung 28 des Magnetkerns 27 hindurchragt und in eine Ausnehmung 204 des Ankers 22 einsteht. Der Stößel 4 teilt sich auf in einen topfartigen Bereich 40 (siehe insbesondere Fig. 2) und einen stiftartigen Bereich 41. Insbesondere der dem stiftartigen Bereich 41 abgewandte Bereich des topfartigen Bereich 40 des Stößels 4 ist auf dem bevorzugt zylindrisch ausgeformten Ventilblock 31 geführt, beziehungsweise aufgesteckt. Die Feder 5 befindet sich zwischen dem Ventilblock 31 und dem Stößel 4. Insbesondere ist die Feder 5 in den topfartigen Bereich 40 des Stößels 4 eingelegt und benötigt somit keinen zusätzlichen Bauraum in dem erfindungsgemäßen Ventil. Am Boden 400 des topfartigen Bereichs 40 befindet sich dabei eine Ringnut 44, die den Haltedorn 45 (als topfseitiges Ende des stiftartigen Bereichs 41 des Stößels 4) umgibt. Der Haltedorn 45 bildet somit eine Führung für die Feder 5.

Auch die dem Antriebsteil 2 zugewandte Oberseite des Ventilblocks 31 besitzt eine Ringnut 37, die einen entsprechenden Haltedorn 38 umgibt und bezogen auf den Ventilblock 31 eine gute Lagerung und Führung für die Feder 5 zur Verfügung stellt.

Der stiftartige Bereich 41 weist zwei Kragen 46, 47 auf (Fig. 2). Als Kragen 46, 47 wird dabei ein Absatz bezeichnet, an welchem sich der Außendurchmesser des stiftartigen Bereichs 41 aufweitet. Der erste, dem Antriebselement 21/Anker 22 zugewandtere Kragen 46 ist in Einbaustellung so positioniert, dass er in die Durchdringungsöffnung 28 des Magnetkerns 27 einzutauchen vermag. Dies ist gut im Vergleich zur Stellung des Kragens 46 in Fig. 1a, 1b erkennbar. Durch die Lage des Kragens 46 relativ zu der Durchdringungsöffnung 28 ist auch das Schaltverhalten beziehungsweise das magnetische Ansprechen einstellbar.

Der zweite, mehr dem ventilteil 3 zugewandte Kragen 47 ist der Übergang, beziehungsweise der Anschluss des topfartigen Bereiches 40 mit dem stiftartigen Bereich 41. Der sich an dem zweiten Kragen 47 anschließende Bereich umschließt die Ringnut 44 und weitet sich dann am Ende der Ringnut 44 nochmals aus in einen im Wesentlichen zylindrischen, insbesondere topfartigen Bereich 40, der an seinem unteren Ende den Dichtabschnitt 42 aufweist, mit welchem der Stößel 4 - je nach Stellung des Stößels 4 - die Durchlassöffnung 30 des Ventilblocks 31 öffnet beziehungsweise freigibt oder leckagefrei verschließt.

Am inneren, dem Dichtabschnitt 42 anschließenden, dem Boden 400 zugewandten Bereich des topfartig ausgebildeten Bereiches 40 des Stößels 4 schließen sich mindestens eine Entlüftungsöffnung 43 an, durch welche das Innenvolumen 48 des Stößels 4 gegenüber dem mit Mediendruck beaufschlagten Leitungsbereich (insbesondere dem Innenraum des Gehäuses 200, zum Beispiel dem Ringspalt 39) druckausgleichbar ist.

Der topfartige Bereich 40 besitzt auf seiner Innenseite an seinem unteren, auch den Dichtabschnitt 42 aufweisenden Endfläche eine Gleit- oder Führungsfläche 49, welche auf dem Ventilblock, insbesondere auf der Umfangsfläche des bevorzugt zylindrisch gebildeten Ventilblocks 31 beweglich geführt beziehungsweise gelagert ist. Für ein leichtgängiges Betätigen des Stößels 4 ist eine entsprechende Gleitführung oder Härtung an der Gleit- beziehungsweise Führungsfläche 49 und/oder der mitkorrespondierenden Mantelfläche des Ventilblocks 31 vorgesehen.

In Fig. 1b ist die NO (normal offen) Ventilstellung gezeigt. Ohne Leistungsaufnahme, das heißt, ohne Stromfluss durch die Magnetspule 26 ist der Stößel 4 aufgrund der zwischen dem Stößel 4 und dem Ventilblock 31 angeordneten entspannten Feder 5 so nach oben versetzt, dass auch der Stößel 4, insbesondere der Dichtabschnitt 42 die im Ventilblock 31 angeordnete Durchlassöffnung 30 freigibt.

In Fig. 1a ist die geschlossene Stellung des Ventils gezeigt, bei welcher der Elektromagnet bestromt ist, also Leistung aufnimmt.

Das erfindungsgemäße Ventil ist sowohl als Schalt- wie auch als Proportionalventil ausbildbar.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, bestehend aus einem Antriebsteil (2) und einem Ventilteil (3), bei welchem das Ventilteil (3) einen, zumindest eine Durchlassöffnung (30) aufweisenden Ventilblock (31) sowie einen bewegbaren Stößel (4) aufweist, wobei der Stößel (4) mit dem vom Antrieb bewegbaren Antriebselement (21) in Wirkverbindung steht, der Stößel (4) je nach seiner Stellung die Durchlassöffnung (30) freigibt oder verschließt und zwischen Ventilblock (31) und Stößel (4) eine Feder (5) angeordnet ist, gegen deren rückstellende Kraft das Antriebselement (21) den Stößel (4) anstellt.

2. Ventil nach Anspruch 1, **dadurch gekennzeichnet, dass** der Stößel (4) an seinem dem Ventilblock (31) zugewandten Ende topfartig (40) ausgebildet ist und auf dem Ventilblock (31) geführt ist.

3. Ventil nach Anspruch 1 oder 2, **dadurch gekennzeichnet, dass** der Stößel (4) an seinem dem Antriebselement (21) zugewandten Ende stift- (41) oder hülsenartig ausgebildet ist.

4. Ventil nach einem der vorhergehenden Ansprüche, **dadurch gekennzeichnet, dass** Stößel (4) und Antriebselement (21) als einzelne Elemente unabhängig voneinander hergestellt und starr miteinander verbunden sind.

5. Ventil nach einem der vorhergehenden Ansprüche, **dadurch gekennzeichnet, dass** Stößel (4) und Antriebselement (21) durch Kraftwirkung, insbesondere in Bewegungsrichtung (29) des Antriebselementes (21), miteinander verbunden sind.

6. Ventil nach einem der vorhergehenden Ansprüche, **dadurch gekennzeichnet, dass** Antriebselement (21) und Stößel (4) einstückig ausgebildet sind.

7. Ventil nach einem der vorhergehenden Ansprüche, **dadurch gekennzeichnet, dass** der Stößel (4) an seinem topfartigen Bereich (40) an dem dem Antriebselement (21) abgewandten Ende einen, mit zumindest einer Durchlassöffnung (30) zusammenwirkenden, Dichtabschnitt (42) aufweist und der topfartige Bereich, vom Dichtabschnitt (42) beabstandet, mindestens eine Entlüftungsöffnung (43) aufweist.

8. Ventil nach einem der vorhergehenden Ansprüche, **dadurch gekennzeichnet, dass** die Längserstreckung der Durchlassöffnung (30) winklig, insbesondere rechtwinklig orientiert ist zur Bewegungsrichtung (29) des Antriebselementes (21) des Stößels (4).

9. Ventil nach einem der vorhergehenden Ansprüche, **dadurch gekennzeichnet, dass** der Stößel (4) ein- oder mehrteilig ausgebildet ist.

10. Ventil nach einem der vorhergehenden Ansprüche, **dadurch gekennzeichnet, dass** der Stößel (4) im Ganzen oder zumindest Einzelteile des Stößels (4) durch einen Stanz- oder Pressvorgang, insbesondere einen Kaltumformungsvorgang, gewonnen wird.

11. Ventil nach einem der vorhergehenden Ansprüche, **gekennzeichnet durch** eine Gleitführung, wie z.B. eine Gleitbeschichtung, eine Folienlagerung des Stößels (4) auf dem Ventilblock (31) oder einer Härtung.

12. Ventil nach einem der vorhergehenden Ansprüche, **dadurch gekennzeichnet, dass** als Antrieb (20) ein Elektromagnet (23) vorgesehen ist, bei welchem der im Ankerraum (24) beweglich gelagerte Anker (22) als Antriebselement (21) bei Bestromung einer Wicklungen von stromleitenden Draht tragenden Magnetspule (26) bewegt wird, um einen Arbeitsluftspalt (25) zu verkleinern oder zu verschließen.

13. Ventil nach einem der vorhergehenden Ansprüche, **dadurch gekennzeichnet, dass** der Ankerraum (24) von einem Magnetkern (27) begrenzt wird und der Magnetkern (27) eine Durchdringungsöffnung (28) für den Stößel (4), insbesondere den stiftartigen Bereich (41) des Stößels (4) aufweist.

14. Ventil nach einem der vorhergehenden Ansprüche, **dadurch gekennzeichnet, dass** sich der Arbeitsluftspalt (25) zwischen dem Magnetkern (27) und der, dem Magnetkern (27) zugewandten, Ankerseite befindet.
